# EUROPÄISCHE PATENTSCHRIFT

(11) **EP 2 911 989 B1**
(45) Veröffentlichungstag und Bekanntmachung des Hinweises auf die Patenterteilung: **24.05.2017**
(21) Anmeldenummer: 13780124.7
(22) Anmeldetag: 21.10.2013
(51) Int. Cl.: C03B 33/03, C03B 33/033

(54) **VORRICHTUNG UND VERFAHREN ZUM LAGERN UND FIXIEREN EINER GLASSCHEIBE**
DEVICE AND METHOD OF STORING AND FIXING A GLASS SHEET
APPAREIL ET MÉTHODE DE STOCKAGE ET DE FIXATION D'UNE FEUILLE DE VERRE

(30) Priorität: 23.10.2012 DE 102012219332
(43) Veröffentlichungstag der Anmeldung: 02.09.2015
(73) Patentinhaber: MDI Advanced Processing GmbH, 55120 Mainz (DE)
(72) Erfinder: HOETZEL, Bernd Christoph, 55578 Wallertheim (DE)
(74) Vertreter: Fuchs Patentanwälte Partnerschaft mbB
(86) Internationale Anmeldenummer: PCT/EP2013/071956
(87) Internationale Veröffentlichungsnummer: WO 2014/064044

(56) Entgegenhaltungen:
- US-A- 5 165 585
- US-A1- 2007 169 849

## Beschreibung

Die vorliegende Erfindung betrifft eine Vorrichtung zum Lagern und Fixieren einer Scheibe aus sprödem Material wie einer Glasscheibe, insbesondere einer Dünnglasscheibe, während eines Schneidprozesses, bei dem die Glasscheibe entlang einer Schneidkante geschnitten wird, umfassend einen von Gas durchströmbaren Grundkörper, und eine Gasführungseinrichtung zum Zu- und Durchführen von Gas in und durch den Grundkörper, wobei die Glasscheibe auf dem aus dem Grundkörper austretenden Gas gelagert werden kann. Weiterhin betrifft die Erfindung ein entsprechendes Verfahren.

Verfahren zum Schneiden von Glasscheiben können grundsätzlich in zwei Kategorien unterteilt werden. Zum einen ist es möglich, die Glasscheiben in einem Arbeitsgang entlang einer Schneidkante komplett durchzuschneiden oder zum anderen entlang einer Linie teilweise einzuschneiden oder einzuritzen und anschließend zu brechen, wobei die Linie die Bruchkante vorgibt. Insofern entsteht streng genommen beim erstgenannten Verfahren eine Schneidkante, während beim zuletzt genannten Verfahren sowohl eine Ritz- oder Schneidkante als auch eine Bruchkante erzeugt werden. Im Folgenden soll der Begriff Schneidkante für sämtliche beim Schneiden der Glasscheibe entstehenden Kanten stehen. Welches der beiden Schneidverfahren zum Einsatz kommt, wird insbesondere vom Material und der Dicke des Werkstücks bestimmt. In beiden Fällen können Laser eingesetzt werden, um die Glasscheibe komplett durchzuschneiden oder nur teilweise anzuschneiden. Das Anritzen kann alternativ auch mit einem Ritzel, beispielsweise aus Diamant, oder einem Schneidrädchen durchgeführt werden. Die Glasscheibe soll im Rahmen dieser Anmeldung stellvertretend für alle Scheiben aus sprödem Material stehen, bei denen dieselben im Folgenden diskutierten Probleme auftreten.

Bei beiden Schneidverfahren muss die Glasscheibe auf eine Unterlage aufgebracht und dort fixiert werden. Die Fixierung kann beispielsweise mittels eines Unterdrucks oder eines Vakuums geschehen, so dass die Glasscheibe auf die Unterlage gezogen und so fixiert wird. Aufgrund von fertigungstechnischen Grenzen ist die Unterlage nie ideal plan, so dass Unebenheiten nicht vermieden werden können. Insbesondere bei Dünnglasscheiben, also bei Glasscheiben mit einer Glasdicke von < 200 µm, kann dies dazu führen, dass aufgrund der Unebenheiten Spannungen und Spannungsspitzen auf unkontrollierte Weise in die Glasscheibe eingebracht werden, die im ungünstigsten Fall zum Bruch der Glasscheibe führen, in jedem Fall jedoch zu einer qualitativ minderwertigen Schneidkante, sofern die Spannungen bis in die Schneidkante reichen. Weiterhin ist es in diesem Fall schwierig, die Glasscheibe komplett durchzuschneiden, ohne auch die Unterlage zu beschädigen, so dass diese Weise der Fixierung hauptsächlich für das Anritzen mit anschließendem Brechen geeignet ist, was losgelöst von der Unterlage durchgeführt wird.

Es ist aus dem Stand der Technik bekannt, dem Problem der Unebenheiten der Unterlage dadurch zu begegnen, dass die Glasscheibe auf einem Gaskissen, insbesondere einem Luftkissen gelagert wird, welches mit Hilfe von Druckluft bereitgestellt wird, wobei das verwendete Gas gemäß dem jeweiligen Anwendungsfall frei ausgewählt werden kann. Hierdurch werden zwar die Spannungen reduziert, allerdings müssen zusätzliche Maßnahmen zur Fixierung der Glasscheibe ergriffen werden, da die Lage der Glasscheibe durch das Luftkissen weder in der Höhe noch seitlich klar definiert werden kann, was eine notwendige Bedingung ist, um die Glasscheibe definiert entlang einer Schneidkante schneiden zu können. Man muss Haltevorrichtungen vorsehen, die mit der Glasscheibe in Kontakt treten. Hierdurch wird jedoch die Flexibilität beim Schneidprozess deutlich vermindert, da der Verlauf der Schneidkanten auf die Position der Haltevorrichtung abgestimmt werden muss.

Die EP 1 044 930 A2 offenbart eine Vorrichtung zum Lagern und Fixieren einer Glasscheibe während eines Schneidprozesses, bei dem die Glasscheibe entlang einer Ritzlinie gebrochen wird. Die Vorrichtung weist zwei Balken auf, die von Gas durchströmbar sind, welches über entsprechende Leitungen zugeführt wird. Über diese Leitungen kann sowohl ein Überdruck als auch ein Unterdruck an der Auflagefläche des Balkens angelegt werden. Wenn Überdruck anliegt, kann die Glasscheibe 3 gut auf dem Balken in die gewünschte Position verschoben und durch Anlegen eines Unterdrucks in der gewünschten Position fixiert werden. Durch Anlegen eines Unterdrucks tritt die Glasscheibe in Kontakt mit dem Balken. Es sind zwei Balken vorhanden, die in einem Abstand voneinander angeordnet sind und einen Spalt bilden. Um zu erreichen, dass die Schneidkante beabstandet vom Grundkörper positioniert werden kann, muss die Glasscheibe so angeordnet werden, dass die Schneidkante im Bereich des Spalts verläuft.

Die EP 0 457 751 A2 (entspr. US 5 165 585 A) zeigt eine Vorrichtung zum Lagern und Fixieren einer Glasscheibe während eines Schneidprozesses, bei dem die Glasscheibe entlang einer Schneidkante geschnitten wird. Es ist ein von Gas durchströmbarer Grundkörper in Form von Saugkästen vorhanden. Die Glasscheibe wird durch Unterdruck an die Saugkästen herangezogen. Die Glasscheibe wird von einer Hebeleiste entlang der Schneidkante durchbrochen, die in einem Spalt des Saugkastens positioniert werden muss, in welchem auch die Hebelleiste angeordnet ist. Auch hier muss ein Spalt vorhanden sein, um die Schneidkanten beabstandet zum Grundkörper zu positionieren.

Die US 2007/169849 A1 offenbart eine Vorrichtung zum Fixieren und Schneiden von dünnen Glasscheiben, die beispielsweise für LCDs eingesetzt werden, bei dem die Glasscheiben durchgebogen werden und entlang einer Schneidlinie, die sich entlang der Linie der größten Erhebung erstreckt, beispielsweise mit einem Laserstrahl geschnitten werden. In den Figuren 9 bis 19 werden Ausführungsbeispiele der Vorrichtung gezeigt, bei denen die Glasscheiben während des Schneidens mittels eines Luftstroms angehoben werden. Die Luft wird durch einen *"air flow apparatus"* 60 geleitet, der eine Anzahl von Kanälen 71, 72 und eine Anzahl von Löchern 68 aufweist. Aus den Figuren 9 bis 11 dieser Druckschrift geht hervor, dass im Bereich, in welchem sich die Schneidlinie 7a befindet, ein erhöhter Luftstrom eingestellt werden kann, so dass die Glasscheibe dort am stärksten angehoben wird, wie es aus Figur 9 besonders gut erkenntlich ist.

Die Glasscheibe tritt während des Schneidprozesses nicht mit dem Grundkörper in Kontakt, was ebenfalls aus Figur 9 erkenntlich und in Absatz [0091] beschrieben ist. Die Glasscheibe wird von Führungskörpern 28 (vgl. Absatz [0090]) gehalten, die aber nicht von der Luft durchströmbar sind.

Aufgabe der vorliegenden Erfindung ist es daher, eine Vorrichtung und ein Verfahren zum Lagern und Fixieren einer Glasscheibe, insbesondere einer Dünnglasscheibe mit einer Dicke von <200µm anzugeben, die es ermöglichen, die Glasscheibe flexibel mit einer hohen Schneidkantenqualität schneiden zu können, ohne dabei auf ein bestimmtes Schneidverfahren festgelegt zu sein.

Gelöst wird die Aufgabe mittels einer Vorrichtung der eingangs genannten Art mit dem Merkmal des kennzeichnenden Teils des Anspruchs 1 sowie durch ein Verfahren nach Anspruch 10. Vorteilhafte Weiterbildungen der Vorrichtung und des Verfahrens sind in den Unteransprüchen aufgeführt.

Dadurch, dass die erfindungsgemäße Vorrichtung eine Fixiereinheit zum Fixieren der Glasscheibe in Bezug auf die Vorrichtung aufweist, die mit der Glasscheibe zusammenwirkt, dass während des Schneidprozesses die Glasscheibe in einem Kontaktbereich mit dem Grundkörper in Kontakt tritt und die Schneidkanten vom austretenden Gas außerhalb des Kontaktbereichs angehoben und beabstandet vom Grundkörper positioniert werden, wobei die Fixiereinheit Unterdruckmittel zum Bereitstellen eines Unterdrucks oder eines Vakuums zum Fixieren der Glasscheibe in Bezug auf die Vorrichtung umfasst, lassen sich folgende technischen Effekte und Vorteile erzielen: Durch den Kontakt der Glasscheibe mit dem Grundkörper im Kontaktbereich wird die Glasscheibe in ihrer Position fixiert, so dass sie sich während des Schneidprozesses nicht verschieben kann. Das austretende Gas sorgt dafür, dass die Glasscheibe außerhalb des Kontaktbereichs angehoben und vom Grundkörper entfernt wird, so dass die Schneidkanten freiliegen. Somit kann die Glasscheibe zum Schneiden sowohl komplett durchschnitten oder angeritzt werden, ohne dass der Grundkörper durch das angewendete Schneidverfahren beschädigt werden kann. Man ist folglich auf kein Schneidverfahren festgelegt. Zwar werden durch das aus dem Grundkörper austretenden Gas auch Spannungen in die Glasscheibe eingetragen, die sich jedoch bei Verwendung der erfindungsgemäßen Vorrichtung gleichmäßig in der Glasscheibe verteilen, im Gegensatz zu den Unebenheiten von bekannten Unterlagen, wie eingangs diskutiert. Spannungsspitzen insbesondere im Bereich der Schneidkanten werden vermieden. Hierdurch lässt sich die Qualität der Schneidkanten steigern. Zudem können die mechanischen Eigenschaften der zu behandelnden Glasscheibe mit dem Volumenstrom des aus dem Grundkörper austretenden Gases berücksichtigt werden, so dass man Glasscheiben unterschiedlicher Dicke, Duktilität und Härte schneiden kann, ohne dabei zu starke Spannungen einzutragen, die zur Beschädigung der zu schneidenden Glasscheibe führen könnten. Als Gas wird vorzugsweise Luft verwendet.

Die Ausnutzung des ansaugenden Effekts von Unterdruck oder eines Vakuums hat den Vorteil, dass die Glasscheibe ohne Zuhilfenahme von weiteren Komponenten auf der Unterlage fixiert werden kann. Man erreicht somit schnell eine Fixierung der Glasscheibe, die auch flexibel geändert werden kann. Soll beispielsweise die Position der Glasscheibe geändert werden, schaltet man die Unterdruckmittel kurz aus und positioniert die Glasscheibe wunschgemäß. Sobald die Unterdruckmittel wieder eingeschaltet werden, wird die Glasscheibe wieder fixiert.

Es ist bevorzugt, wenn die Gasführungseinrichtung eine Anzahl von Kanälen zum Durchführen des Gases durch den Grundkörper umfasst. Die Kanäle lassen sich aus fertigungstechnischer Sicht einfach realisieren und können so positioniert werden, wie es für den jeweiligen Anwendungsfall am Günstigsten ist. Der Gasstrom, insbesondere der Luftstrom, lässt sich sehr gezielt führen, zudem können die Kanäle auf einfache Weise für den Fall gereinigt werden, dass sie sich im Betrieb der Vorrichtung beispielsweise durch Schneidstaub vollsetzen sollten.

Eine Weiterbildung der erfindungsgemäße Vorrichtung ist gekennzeichnet durch eine auf den Grundkörper aufgebrachte Schicht, insbesondere eine Sinterschicht, die von Gas durchströmbar und so auf dem Grundkörper aufgebracht ist, dass die Sinterschicht den Kontaktbereich umfasst. Eine von Gas durchströmbare Schicht, die auf den Grundkörper aufgebracht ist, hat den Vorteil, dass auf eine Anzahl von Kanälen zum Führen des Gases durch den Grundkörper verzichtet werden kann, so dass der Grundkörper mechanisch stärker belastbar ist. Zudem kann die Schicht so gewählt werden, dass sie besonders für die auftretenden Bedingungen beim Schneiden geeignet ist, so dass sie den Grundkörper schützt. Insbesondere eine als Sinterschicht ausgeführte von Gas durchströmbare Schicht kann so ausgeführt werden, dass sie sehr hitzebeständig ist, so dass sich diese Weiterbildung insbesondere für Laserschneiden eignet, da die Laserstrahlen, die unbeabsichtigt auf die Sinterschicht fokussiert werden, die Sinterschicht nicht oder nur in vernachlässigbarem Umfang beschädigen. Weiterhin ist es möglich, die Sinterschicht sehr plan und eben auszugestalten, gleichzeitig jedoch eine hohe Härte bereitzustellen, so dass keine oder nur geringe Spannungsspitzen über den Kontaktbereich in die Glasscheibe eingetragen werden. Aufgrund der erzielbaren Ebenheit kann die Glasscheibe auch dann geritzt werden, wenn die Gas- oder Luftzufuhr aus welchen Gründen auch immer unterbrochen sein sollte. Hierdurch wird die Zuverlässigkeit der Vorrichtung erhöht.

Eine besonders bevorzugte Ausgestaltung zeichnet sich dadurch aus, dass die Unterdruckmittel einen oder mehrere den Grundkörper und/oder die Sinterschicht durchlaufende Abführkanäle und eine mit den Abführkanälen zusammenwirkende Vakuumpumpe zum Abführen eines Teils des Gases, welche aus dem Grundkörper oder der Sinterschicht austritt, aufweisen. Dadurch, dass der Abführkanal den Grundkörper und die Sinterschicht durchläuft, kann die erfindungsgemäße Vorrichtung kompakt ausgeführt werden, so dass sie raumsparend ist. Die Vakuumpumpe kann direkt unter dem Grundkörper befestigt werden, so dass weiterer Bauraum gespart wird. Es können handelsübliche Vakuumpumpen verwendet werden, so dass die Vorrichtung kostengünstig bereitgestellt werden kann. Für den Fall, dass der Grundkörper eine Sinterschicht umfasst, ist es nicht zwingend notwendig, dass die Abführkanäle die Sinterschicht komplett durchlaufen, sondern es genügt, wenn die Abführkanäle in die Sinterschicht hineinragen oder so mit der Sinterschicht zusammenwirken, dass ein Teil des austretenden Gases auch wieder abgesaugt werden kann, um den Unterdruck an der gewünschten Stelle bereitzustellen.

In einer bevorzugten Weiterbildung sind in den Abführkanälen Sperreinrichtungen zum wahlweisen Sperren oder Freigeben des durch die Abführkanäle strömenden Gasstroms angeordnet. Hierdurch können gezielt Unterdruckbereiche bereitgestellt oder abgeschaltet werden. Je dichter die Schneidkanten an den von Gas durchströmten Abführkanälen liegen, desto höher sind die Spannungen im Bereich der Bruch- bzw. Schneidkanten, wodurch die Qualität der Bruch- bzw. Schneidkanten reduziert wird. Übersteigen die Spannungen aufgrund der Nähe der Bruch- bzw. Schneidkanten zu einem von Gas durchströmten Abführkanal das akzeptable Maß, so kann durch Abschalten des oder der entsprechenden Abführkanäle die Spannung im Bereich der Schneidkanten reduziert werden, ohne dass die Glasscheibe neu positioniert werden muss. Hierdurch ist es insbesondere möglich, auf einfache und flexible Weise die Glasscheibe in Streifen zu schneiden, ohne die Glasscheibe verrücken zu müssen. Es lassen sich somit zielgerichtet Vakuum- oder Unterdruckfelder zuschalten, welche die Position der aktuellen Schneidkante berücksichtigen.

Vorzugsweise umfassen die Mittel weiterhin eine Leiteinrichtung zum Leiten des Stroms des aus dem Grundkörper oder der Sinterschicht austretenden Gases. Die Leiteinrichtung kann eine Hülse oder ein Gummikörper sein, auf welche die Glasscheibe aufgelegt wird. Die Leiteinrichtung prägt dem Strom des aus der Sinterschicht austretenden Gases eine Vorzugsrichtung auf. Das Gas, die auf der dem Abführkanal zugewandten Seite der Leiteinrichtung aus der Sinterschicht austritt, wird bei aufgelegter Glasschaube hauptsächlich zum Abführkanal hin geleitet und somit abgesaugt, wodurch ein Unterdruck entsteht. Das Gas, das auf der von Abführkanal abgewandten Seite austritt, wird einen Überdruck erzeugen und die Glasscheibe anheben, bevor sie seitlich die Vorrichtung verlässt. Die Leiteinrichtung ermöglicht es, Überdruck- und Unterdruckbereiche definiert voneinander zu trennen und örtlich festzulegen.

In einer weiteren Ausführungsform umfasst die Fixiereinheit magnetische, magnetisierbare oder magnetisierte Mittel. Unter magnetischen Mitteln sollen Mittel verstanden werden, die von sich aus magnetisch sind, wie etwa Eisen, Nickel oder Kobalt. Sie werden von einem Dauermagneten angezogen oder abgestoßen. Ist das Mittel magnetisiert, so hat es selbst die Eigenschaft eines Dauermagneten. Magnetisierbare Mittel können beispielsweise durch Überstreichen mit einem Dauermagneten magnetisiert werden. Aufgrund der anziehenden Kraft der magnetischen Mittel wird die Glasscheibe in Bezug auf die Vorrichtung fixiert. Es sind Ausführungen möglich, bei denen die Magnetkraft durch Anlegen eines elektrischen Felds hervorgerufen wird. Entsprechend kann die Magnetkraft durch Abschalten des elektrischen Felds aufgehoben werden. Somit kann die Glasscheibe wahlweise fixiert oder freigegeben werden. Es ist ferner denkbar, dass die Glasscheibe selbst magnetische Bestandteile aufweist, die durch eine entsprechende Ausgestaltung der Vorrichtung angezogen werden, wodurch die Glasscheibe fixiert wird.

Es hat sich als vorteilhaft herausgestellt, wenn die Sinterschicht magnetische, magnetisierbare oder magnetisierte Partikel umfasst, die mit auf die Glasscheibe aufbringbaren magnetischen, magnetisierbaren oder magnetisierten Körpern zum Fixieren der Glasscheibe zusammenwirken. In diesem Ausführungsbeispiel werden die magnetischen, magnetisierbaren oder magnetisierten Körper auf der der Sinterschicht abgewandten Seite der Glasscheibe aufgebracht, wodurch der Kontaktbereich sehr einfach bestimmt und verändert werden kann, beispielsweise manuell oder durch entsprechende Greifmechanismen. Je nach Dicke der Glasscheibe kann das Eigengewicht der Körper mit zur Fixierung der Glasscheibe verwendet werden. Dies ist insbesondere bei dickeren Glasscheiben von Vorteil, wo sonst sehr große Magnetfelder erzeugt werden müssten, um eine ausreichende Fixierung zu erreichen. Dadurch, dass die Sinterschicht magnetische, magnetisierbare oder magnetisierte Partikel umfasst, sind keine zusätzlichen Maßnahmen notwendig, um die anziehende Wirkung des Magnetismus zu generieren. Die Vorrichtung kann hierdurch kompakt gehalten werden, gleichzeitig bleibt die Komplexität der Vorrichtung überschaubar.

Die der Erfindung zugrunde liegende Aufgabe wird weiterhin auch gelöst durch ein Verfahren zum Lagern und Fixieren einer Glasscheibe, insbesondere einer Dünnglasscheibe mit einer Dicke von <200µm während eines Schneidprozesses, bei dem die Glasscheibe entlang einer Schneidkante geschnitten wird, auf einer Vorrichtung, wobei die Vorrichtung einen von Gas durchströmbaren Grundkörper umfasst, umfassend folgende Schritte:
- Zu- und Durchführen von Gas in und durch den Grundkörper mittels einer Gasführungseinrichtung,
- Lagern der Glasscheibe auf dem aus dem Grundkörper austretenden Gas, und
- Fixieren der Glasscheibe in Bezug auf die Vorrichtung mittels einer Fixiereinheit, die derart mit der Glasscheibe zusammenwirkt, dass während des Schneidprozesses die Glasscheibe in einem Kontaktbereich mit dem Grundkörper in Kontakt tritt und die Schneidkanten vom austretenden Gas außerhalb des Kontaktbereichs angehoben und beabstandet vom Grundkörper positioniert werden, wobei die Fixiereinheit Unterdruckmittel zum Bereitstellen eines Unterdruncks oder eines Vakuums zum Fixieren der Glasscheibe in Bezug auf die Vorrichtung umfasst.

Die Vorteile und technischen Effekte, die durch das erfindungsgemäße Verfahren erreicht werden, entsprechen denjenigen, die für die erfindungsgemäße Vorrichtung erläutert worden sind.

Eine bevorzugte Ausgestaltung des erfindungsgemäßen Verfahrens zeichnet sich dadurch aus, dass der Schritt des Fixierens der Glasscheibe in Bezug auf die Vorrichtung das Bereitstellen eines Unterdrucks oder eines Vakuums mittels Unterdruckmitteln umfasst. Auch in dieser Ausgestaltung lassen sich dieselben Vorteile und technischen Effekte erzielen, die für die entsprechende Ausführungsform der erfindungsgemäßen Vorrichtung genannt worden sind. Insbesondere führen Unebenheiten in der Unterlage nicht zum unkontrollierten Eintrag von Spannungen in die Glasscheibe, die zum Bruch führen könnten. Ferner ist man auf kein bestimmtes Schneidverfahren festgelegt, da die Schneidkanten freiliegen und somit der Grundkörper während des Schneidens nicht beschädigt wird.

Eine andere Ausführungsform des erfindungsgemäßen Verfahrens ist dadurch gekennzeichnet, dass der Schritt des Fixierens der Glasscheibe in Bezug auf die Vorrichtung magnetische Mittel und insbesondere das Zusammenwirken von magnetischen, magnetisierbaren oder magnetisierten Partikeln einer auf den Grundkörper aufgebrachten Sinterschicht mit auf die Glasscheibe aufbringbaren magnetischen, magnetisierbaren oder magnetisierten Körpern umfasst. Auch in dieser Ausgestaltung lassen sich dieselben Vorteile und technischen Effekte erzielen, die für die entsprechende Ausführungsform der erfindungsgemäßen Vorrichtung genannt worden sind.

Die Erfindung wird anhand von bevorzugten Ausführungsbeispielen unter Bezugnahme auf die anhängenden Zeichnungen im Detail erläutert. Es zeigen,
- Figur 1a): eine Schnittdarstellung durch ein erstes Ausführungsbeispiel einer erfindungsgemäßen Vorrichtung,
- Figur 1b): eine prinzipielle Draufsicht auf das in Figur 1a) dargestelte Ausführungsbeispiel der erfindungsgemäßen Vorrichtung,
- Figur 2a): eine Schnittdarstellung durch ein zweites Ausführungsbeispiel einer erfindungsgemäßen Vorrichtung,
- Figur 2b): eine prinzipielle Draufsicht auf das in Figur 2a) dargestellte Ausführungsbeispiel der erfindungsgemäßen Vorrichtung,
- Figur 3a): eine Schnittdarstellung durch ein drittes Ausführungsbeispiel einer erfindungsgemäßen Vorrichtung,
- Figur 3b): eine prinzipielle Draufsicht auf das in Figur 3a) dargestelte Ausführungsbeispiel der erfindungsgemäßen Vorrichtung,
- Figur 4a): eine Schnittdarstellung durch ein viertes Ausführungsbeispiel einer erfindungsgemäßen Vorrichtung,
- Figur 4b): eine prinzipielle Draufsicht auf das in Figur 4a) dargestellte Ausführungsbeispiel der erfindungsgemäßen Vorrichtung.

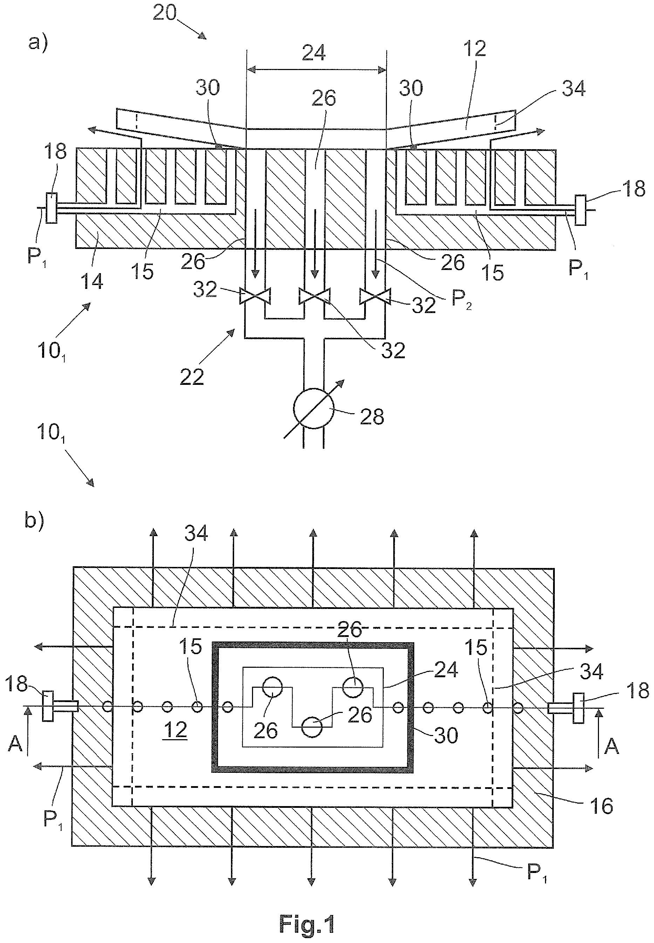

In Figur 1a) ist ein erstes Ausführungsbeispiel einer erfindungsgemäßen Vorrichtung 10₁ zum Lagern und Fixieren einer Glasscheibe 12, insbesondere einer Dünnglasscheibe 12, bei einem Schneidprozess anhand einer prinzipiellen Schnittdarstellung dargestellt. Die erfindungsgemäße Vorrichtung 10₁ kann aber auch zum Schneiden von Scheiben aus jedem spröden Material verwendet werden. Die Vorrichtung 10₁ umfasst einen Grundkörper 14, der von Gas durchströmbar ist. Hierzu weist der Grundkörper 14 eine Gasführungseinrichtung 18 auf, die im dargestellten Beispiel eine Anzahl von Kanälen 15 umfasst. Zum Zuführen der Gas, vorzugsweise Druckluft, in die Kanäle 15 umfasst die Gasführungseinrichtung 18 nicht dargestellte weitere Elemente, beispielsweise Schläuche, Ventile, Druckminderer, Kompressoren und Druckluftleitungen. Die Druckluft durchströmt die Kanäle 15 entlang der von den Pfeilen P₁ dargelegten Richtung. Die Kanäle 15 sind so ausgeführt, dass das sie durchströmende Gas ein Gas- oder Luftpolster oder Luftkissen bereitstellt, auf dem die Glasscheibe 12 gelagert werden kann.

Weiterhin umfasst die erfindungsgemäße Vorrichtung 10₁ eine Fixiereinrichtung 20, mit der die Glasscheibe 12 in Bezug auf die Vorrichtung 10₁ fixierbar ist. Im dargestellten Ausführungsbeispiel umfasst die Fixiereinrichtung 20 Unterdruckmittel 22, die derart ausgestaltet sind, dass die Glasscheibe 12 im Betrieb der Vorrichtung 10₁ in einem Kontaktbereich 24 mit dem Grundkörper 14 in Kontakt tritt, wodurch die Glasscheibe 12 relativ zur Vorrichtung 10₁ fixiert wird. Die Unterdruckmittel 22 umfassen im dargestellten Beispiel drei den Grundkörper 14 durchlaufende Abführkanäle 26, wobei die Anzahl der Abführkanäle 26 beliebig gewählt werden kann. Weiterhin umfassen die Unterdruckmittel 22 eine Vakuumpumpe 28, mittels welcher ein Teil des Gases, die in der Umgebung des freien Endes der Abführkanäle 26 aus dem Grundkörper 14 austritt, abgesaugt wird, wie es mit den Pfeilen P₂ angedeutet ist. Folglich entsteht ein Unterdruck und die Glasscheibe 12 wird an den Grundkörper 16 gezogen, wodurch sie in ihrer Position fixiert wird. Um den Kontaktbereich 24 klarer eingrenzen zu können, ist eine Leiteinrichtung 30 auf der Sinterschicht 16 angeordnet, auf der die Glasscheibe 12 abgelegt wird. Die Leiteinrichtung 30 kann beispielsweise eine Hülse aus Metall oder ein elastisches Gummi sein. Hierdurch wird definiert, welcher Teil des Gases zum Fixieren der Glasscheibe 12 abgesaugt wird und welcher Teil zum Bereitstellen eines Gas- oder Luftpolsters oder Luftkissens zum Lagern der Glasscheibe 12 dient.

Weiterhin sind in den Abführkanälen 26 Sperreinrichtungen 32 vorgesehen, die es ermöglichen, wahlweise die Abführkanäle 26 zu öffnen oder zu schließen und somit den Luftstrom freizugeben oder zu unterbrechen. Hierdurch kann der Kontaktbereich 24 verkleinert oder vergrößert sowie seine Position zielgerichtet verändert werden. Die Sperreinrichtungen 32 können beispielsweise als Ventile oder Sperrschieber ausgeführt sein.

Weiterhin sind Schneidkanten 34 dargestellt, entlang welcher die Glasscheibe 12 mit einem nicht dargestellten Schneidwerkzeug, beispielsweise mit einem CO₂-Laser einem Diamantritzel oder einem Schneidrädchen. Man erkennt, dass die Schneidkanten 34 frei liegen, also einen Abstand zum Grundkörper 14 aufweisen, so dass der Grundkörper 14 beim Schneiden der Glasscheibe 12 nicht beschädigt werden. Das außerhalb der Leiteinrichtung 30 aus dem Grundkörper 14 austretende Gas hebt die Glasscheibe 12 an, während die Glasscheibe 12 innerhalb der Leiteinrichtung 30 vom Unterdruck zum Grundkörper 14 hingezogen wird. Hierdurch wird die Glasscheibe 12 gebogen, wodurch Spannungen in die Glasscheibe 12 eingebracht werden. Allerdings werden die Spannungen sehr gleichmäßig in die Glasscheibe 12 eingebracht und können in ihrer Größe durch den Volumenstrom des Gases gesteuert werden, so dass die Glasscheibe 12 keinen Schaden nimmt und eine hohe Schneidkantenqualität erreicht werden kann. Die Förderleistung der Vakuumpumpe 28 sowie der Volumenstrom des durch den Grundkörper 14 geführten Gases können mittels einer nicht dargestellten Steuer- und Regelungseinrichtung aufeinander abgestimmt und verändert werden.

Der Verlauf der Biegung der Glasscheibe 12 und des Kontaktbereichs 24 sind in den Figuren nur prinzipiell dargestellt und erheben keinen Anspruch auf Übereinstimmung mit den sich im Betrieb der erfindungsgemäßen Vorrichtung 10₁ einstellenden Verläufen.

In Figur 1b) ist das in Figur 1a) dargestellte Ausführungsbeispiel der erfindungsgemäßen Vorrichtung 10₁ anhand einer Draufsicht gezeigt. Man erkennt, dass die Schneidkanten 34 in einem gewissen Abstand zum Kontaktbereich 24 und zur Leiteinrichtung 30 verlaufen. Ferner ist die Schnittebene A-A erkennbar, die zur Darstellung von Figur 1a) verwendet worden ist.

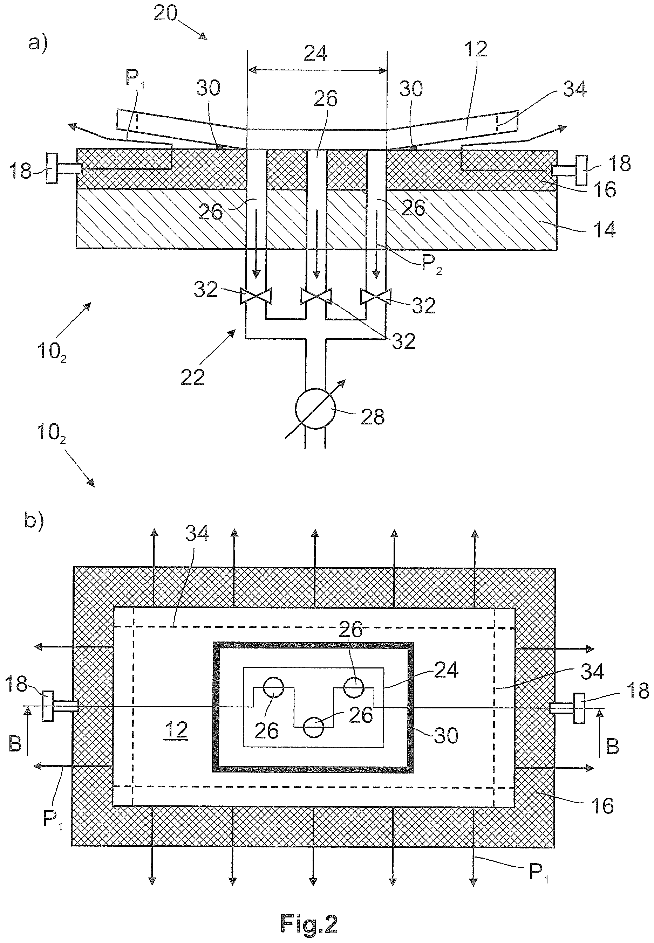

In Figur 2a) ist ein zweites Ausführungsbeispiel der erfindungsgemäßen Vorrichtung 10₂ anhand einer Schnittdarstellung gezeigt. Im Gegensatz zum ersten Ausführungsbeispiel ist auf dem Grundkörper 14 eine Sinterschicht 16 aufgebracht, die aufgrund ihrer Porosität von Gas durchströmbar ist. Entsprechend sind keine Kanäle zum Führen des Gases notwendig. Um jedoch das Gas wunschgemäß zur Glasscheibe 12 zu leiten, kann die Sinterschicht 16 an den entsprechenden Kanten und Flächen mit luftundurchlässigen Schichten versehen oder versiegelt werden. Weiterhin kann der Grundkörper 14 luftundurchlässige Abschnitte aufweisen, so dass das Gas im Wesentlichen nur über die freie Oberfläche der Sinterschicht 16 austreten kann, wie es durch die Pfeile P₁ angedeutet ist. Das Gas wird über die Gasführungseinrichtung 18 in die Sinterschicht 16 eingebracht. Die Abführkanäle 26 durchqueren sowohl den Grundkörper 14 als auch die Sinterschicht 16.

Figur 2b) zeigt das in Figur 2a) dargestellte Ausführungsbeispiel anhand einer Draufsicht. Man erkennt, dass die Schneidkanten 34 in einem gewissen Abstand zum Kontaktbereich 24 aufweisen. Ferner ist die Schnittebene B-B erkennbar, die zur Darstellung von Figur 2a) verwendet worden ist.

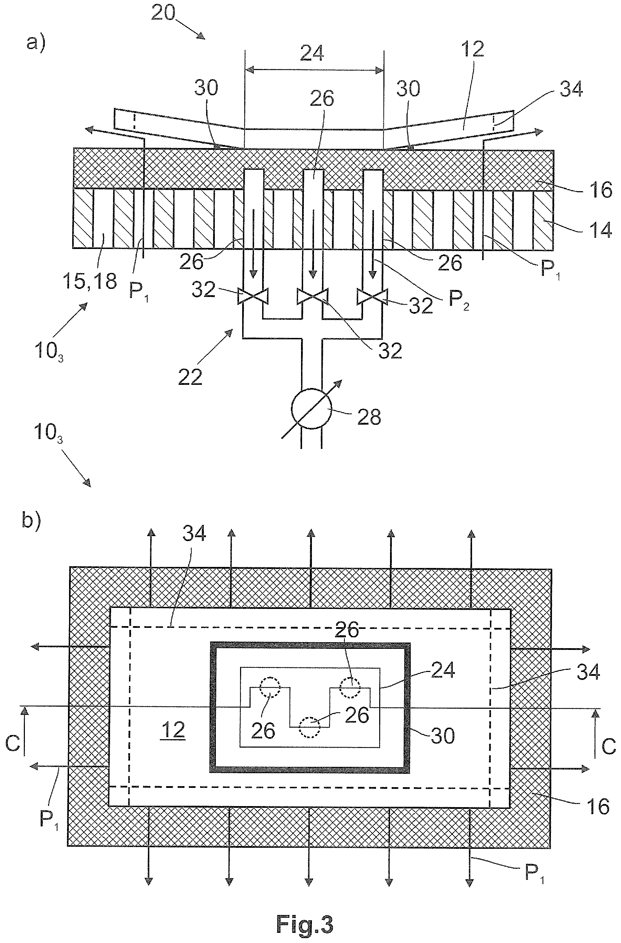

In Figur 3a) ist ein drittes Ausführungsbeispiel der erfindungsgemäßen Vorrichtung 10₃ dargestellt, welches sich darin vom zweiten Ausführungsbeispiel 10₂ unterscheidet, dass die Abführkanäle 26 die Sinterschicht 16 nur teilweise durchqueren und nicht bis zum Kontaktbereich 24 vordringen. Weiterhin umfasst die Gasführungseinrichtung 18 eine Anzahl der Kanäle 15, welche den Grundkörper 14 und die Sinterschicht 16 komplett durchlaufen und die auf nicht dargestellte Weise mit Druckluft beaufschlagbar sind.

Figur 3b) zeigt das in Figur 3a) dargestellte Ausführungsbeispiel anhand einer Draufsicht. Man erkennt, dass die Schneidkanten 34 in einem gewissen Abstand zum Kontaktbereich 24 aufweisen. Ferner ist die Schnittebene C-C erkennbar, die zur Darstellung von Figur 3a) verwendet worden ist.

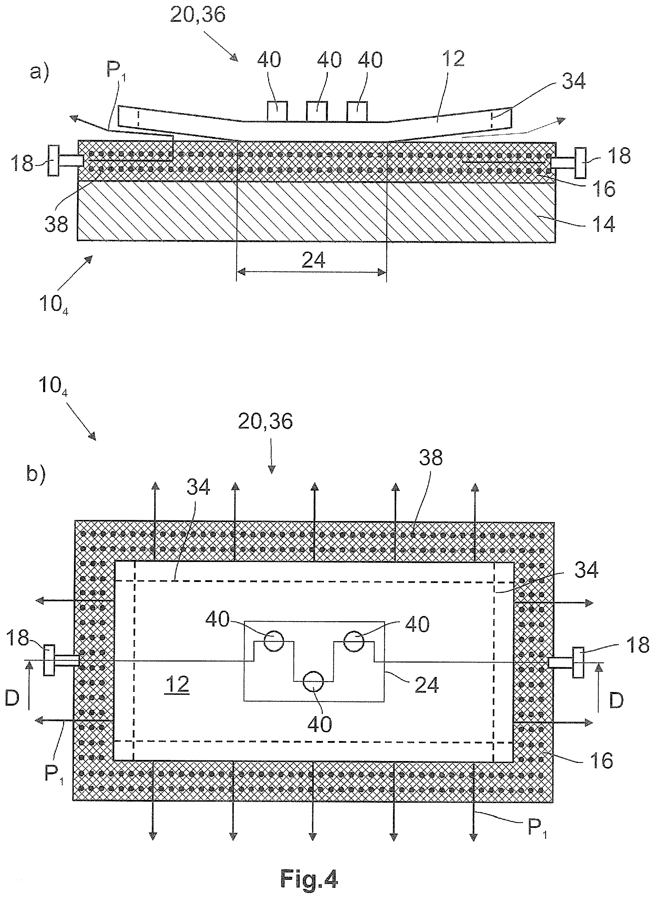

In Figur 4a) ist ein viertes Ausführungsbeispiel der erfindungsgemäßen Vorrichtung 10₄ dargestellt. Es gleicht in weiten Teilen dem in den Figuren 2 und 3 dargestellten Ausführungsbeispielen 10₂ und 10₃, allerdings ist die Fixiereinrichtung 20 anders aufgebaut. Im vierten Ausführungsbeispiel 10₄ umfasst die Fixiereinrichtung 20 magnetische, magnetisierbare oder magnetisierte Mittel 36. Konkret weist die Sinterschicht 16 magnetische, magnetisierbare oder magnetisierte Partikel 38 auf, die mit magnetischen, magnetisierbaren oder magnetisierten Körpern 40 zum Fixieren der Glasscheibe 12 zusammenwirken, die auf die Glasscheibe 12 aufgebracht werden. Durch die anziehende magnetische Wirkung der Partikel 38 und der Körper 40 wird die Glasscheibe 12 im Kontaktbereich 24 auf die Sinterschicht 16 gedrückt und folglich fixiert. Wiederum bewirkt das aus der Sinterschicht 16 austretende Gas, dass die Glasscheibe 12 außerhalb des Kontaktbereichs 24 angehoben wird, so dass die Schneidkanten 34 frei liegen. Die anziehende magnetische Wirkung kann auch durch das hier nicht dargestellte Anlegen eines elektrischen Feldes an die Sinterschicht 16 und/oder an den Grundkörper 14 induziert und in ihrer Größe verändert werden.

In Figur 4b) ist das in Figur 4a) dargestellte Ausführungsbeispiel 10₄ anhand einer Draufsicht gezeigt. Man erkennt, dass die Schneidkanten 34 in einem gewissen Abstand zum Kontaktbereich 24 aufweisen. Ferner ist die Schnittebene D-D erkennbar, die zur Darstellung von Figur 4a) verwendet worden ist.

### Bezugszeichenliste

- 10, 10₁, 10₂: Vorrichtung
- 12: Glasscheibe
- 14: Grundkörper
- 15: Kanal
- 16: Sinterschicht
- 18: Gasführungseinrichtung
- 20: Fixiereinrichtung
- 22: Unterdruckmittel
- 24: Kontaktbereich
- 26: Abführkanal
- 28: Vakuumpumpe
- 30: Leiteinrichtung
- 32: Sperreinrichtung
- 34: Schneidkante
- 36: magnetische, magnetisierbare oder magnetisierte Mittel
- 38: magnetische, magnetisierbare oder magnetisierte Partikel
- 40: magnetische, magnetisierbare oder magnetisierte Körper
- P: Pfeil

## Patentansprüche

1. Vorrichtung zum Lagern und Fixieren einer Scheibe aus sprödem Material wie einer Glasscheibe (12), insbesondere einer Dünnglasscheibe (12) mit einer Dicke von <200µm, während eines Schneidprozesses, bei dem die Glasscheibe (12) entlang einer Schneidkante (34) geschnitten wird, umfassend
- einen von Gas durchströmbaren Grundkörper (14),
- eine Gasführungseinrichtung (18) zum Zu- und Durchführen von Gas in und durch den Grundkörper (14), wobei die Glasscheibe (12) auf dem aus dem Grundkörper (14) austretenden Gas gelagert werden kann,
**gekennzeichnet durch** eine Fixiereinheit (20) zum Fixieren der Glasscheibe (12) in Bezug auf die Vorrichtung (10), die derart mit der Glasscheibe (12) zusammenwirkt, dass während des Schneidprozesses die Glasscheibe (12) in einem Kontaktbereich (24) mit dem Grundkörper (14) in Kontakt tritt und die Schneidkanten (34) vom austretenden Gas außerhalb des Kontaktbereichs (24) angehoben und beabstandet vom Grundkörper (14) positioniert werden, wobei die Fixiereinheit (20) Unterdruckmittel (22) zum Bereitstellen eines Unterdrucks oder eines Vakuums zum Fixieren der Glasscheibe (12) in Bezug auf die Vorrichtung (10) umfasst.

2. Vorrichtung nach Anspruch 1,
**dadurch gekennzeichnet, dass** die Gasführungseinrichtung (18) eine Anzahl von Kanälen (15) zum Durchführen des Gases durch den Grundkörper (14) umfasst.

3. Vorrichtung nach einem der Ansprüche 1 oder 2,
**gekennzeichnet durch** eine auf den Grundkörper (14) aufgebrachte Schicht, insbesondere eine Sinterschicht (16), die von Gas durchströmbar und so auf dem Grundkörper aufgebracht ist, dass die Sinterschicht (16) den Kontaktbereich (24) umfasst.

4. Vorrichtung nach Anspruch 1,
**dadurch gekennzeichnet, dass** die Unterdruckmittel (22) einen oder mehrere den Grundkörper (14) und die Sinterschicht (16) durchlaufende Abführkanäle (26) und/oder eine mit den Abführkanälen (26) zusammenwirkende Vakuumpumpe (28) zum Abführen eines Teils des Gases, welche aus dem Grundkörper (14) oder der Sinterschicht (16) austritt, aufweisen.

5. Vorrichtung nach Anspruch 4,
**dadurch gekennzeichnet, dass** in den Abführkanälen (26) Sperreinrichtungen (32) zum wahlweisen Sperren oder Freigeben des durch die Abführkanäle (26) strömenden Luftstroms angeordnet sind.

6. Vorrichtung nach einem der Ansprüche 1,4 und 5,
**dadurch gekennzeichnet, dass** die Unterdruckmittel (22) weiterhin eine Leiteinrichtung (30) zum Leiten des Stroms des aus dem Grundkörper (14) oder der Sinterschicht (16) austretenden Gases aufweisen.

7. Vorrichtung nach einem der Ansprüche 1 bis 3,
**dadurch gekennzeichnet, dass** die Fixiereinheit (20) magnetische, magnetisierbare oder magnetisierte Mittel (36) umfasst.

8. Vorrichtung nach Anspruch 7,
**dadurch gekennzeichnet, dass** die Sinterschicht (16) magnetische, magnetisierbare oder magnetisierte Partikel (38) umfasst, die mit auf die Glasscheibe (12) aufbringbaren magnetischen, magnetisierbaren oder magnetisierten Körpern (40) zum Fixieren der Glasscheibe (12) zusammenwirken.

9. Verfahren zum Lagern und Fixieren einer Glasscheibe (12), insbesondere einer Dünnglasscheibe (12) mit einer Dicke von <200µm während eines Schneidprozesses, bei dem die Glasscheibe (12) entlang einer Schneidkante (34) geschnitten wird, auf einer Vorrichtung (10), wobei die Vorrichtung (10) einen von Gas durchströmbaren Grundkörper (14) umfasst, umfassend folgende Schritte:
- Zu- und Durchführen von Gas in und durch den Grundkörper (14) mittels einer Gasführungseinrichtung (18),
- Lagern der Glasscheibe (12) auf dem aus dem Grundkörper (14) austretenden Gas, und
- Fixieren der Glasscheibe (12) in Bezug auf die Vorrichtung mittels einer Fixiereinheit (20), die derart mit der Glasscheibe (12) zusammenwirkt, dass während des Schneidprozesses die Glasscheibe (12) in einem Kontaktbereich (24) mit dem Grundkörper (14) in Kontakt tritt und die Schneidkanten (34) vom austretenden Gas außerhalb des Kontaktbereichs (24) angehoben und beabstandet vom Grundkörper (14) positioniert werden, wobei die Fixiereinheit (20) Unterdruckmittel (22) zum Bereitstellen eines Unterdrucks oder eines Vakuums zum Fixieren der Glasscheibe (12) in Bezug auf die Vorrichtung (10) umfasst.

10. Verfahren nach Anspruch 9, **dadurch gekennzeichnet, dass** der Schritt des Fixierens der Glasscheibe (12) in Bezug auf die Vorrichtung (10) das Bereitstellen eines Unterdrucks oder eines Vakuums mittels Unterdruckmitteln (22) umfasst.

11. Verfahren nach Anspruch 9, **dadurch gekennzeichnet, dass** der Schritt des Fixierens der Glasscheibe (12) in Bezug auf die Vorrichtung (10) das Zusammenwirken von magnetischen, magnetisierbaren oder magnetisierten Partikeln (38) einer auf den Grundkörper (14) aufgebrachten Sinterschicht (16) mit auf die Glasscheibe (12) aufbringbaren magnetischen, magnetisierbaren oder magnetisierten Körpern (40) umfasst.

## Claims

1. Device for supporting and fixing a pane made of a brittle material such as a glass pane (12), in particular a thin glass pane (12) having a thickness of <200µm, during a cutting process in which the glass pane (12) is cut along a cutting edge (34), comprising
- a main part (14) through which gas can flow,
- a gas-conducting apparatus (18) for supplying gas to and conducting gas through the main part (14), the glass pane (12) being supportable on the gas exiting the main part (14),
**characterised by** a fixing unit (20) for fixing the glass pane (12) with respect to the device (10), which fixing unit interacts with the glass pane (12) such that, during the cutting process, the glass pane (12) comes into contact with the main part (14) in a contact region (24) and the cutting edges (34) are lifted outside of the contact region (24) by the exiting gas and positioned at a distance from the main part (14), the fixing unit (20) comprising negative pressure means (22) for providing negative pressure or a vacuum for fixing the glass pane (12) with respect to the device (10).

2. Device according to claim 1,
**characterised in that** the gas-conducting apparatus (18) comprises a number of channels (15) for conducting the gas through the main part (14).

3. Device according to either claim 1 or claim 2,
**characterised by** a layer, in particular a sinter layer (16), which is applied on the main part (14), through which gas can flow, and which is applied on the main part such that the sinter layer (16) comprises the contact region (24).

4. Device according to claim 1,
**characterised in that** the negative pressure means (22) comprise one or more outlet channels (26) passing through the main part (14) and the sinter layer (16), and/or a vacuum pump (28) which interacts with the outlet channels (26) and is intended for withdrawing some of the gas exiting the main part (14) or the sinter layer (16).

5. Device according to claim 4,
**characterised in that** shut-off apparatuses (32) are arranged in the outlet channels (26) for selectively blocking or releasing the air stream flowing through the outlet channels (26).

6. Device according to any of claims 1, 4 and 5,
**characterised in that** the negative pressure means (22) further comprise a guiding apparatus (30) for guiding the stream of the gas exiting the main part (14) or the sinter layer (16).

7. Device according to any of claims 1 to 3,
**characterised in that** the fixing unit (20) comprises magnetic, magnetisable or magnetised means (36).

8. Device according to claim 7,
**characterised in that** the sinter layer (16) comprises magnetic, magnetisable or magnetised particles (38) which interact with magnetic, magnetisable or magnetised bodies (40) that can be applied on the glass pane (12) for fixing the glass pane (12).

9. Method for supporting and fixing a glass pane (12), in particular a thin glass pane (12) having a thickness of <200µm, during a cutting process in which the glass pane (12) is cut along a cutting edge (34), on a device (10), wherein the device (10) comprises a main part (14) through which gas can flow, the method comprising the following steps:
- supplying gas to and conducting gas through the main part (14) by means of a gas-conducting apparatus (18),
- supporting the glass pane (12) on the gas exiting the main part (14), and
- fixing the glass pane (12) with respect to the device by means of a fixing unit (20) which interacts with the glass pane (12) such that, during the cutting process, the glass pane (12) comes into contact with the main part (14) in a contact region (24) and the cutting edges (34) are lifted outside of the contact region (24) by the exiting gas and positioned at a distance from the main part (14), the fixing unit (20) comprising negative pressure means (22) for providing negative pressure or a vacuum for fixing the glass pane (12) with respect to the device (10).

10. Method according to claim 9, **characterised in that** the step of fixing the glass pane (12) with respect to the device (10) comprises providing negative pressure or a vacuum by means of negative pressure means (22).

11. Method according to claim 9, **characterised in that** the step of fixing the glass pane (12) with respect to the device (10) comprises the interaction of magnetic, magnetisable or magnetised particles (38) of a sinter layer (16) applied on the main part (14) with magnetic, magnetisable or magnetised bodies (40) which can be applied on the glass pane (12).

## Revendications

1. Dispositif dévolu à la présentation et au verrouillage à demeure d'une plaque de matériau cassant telle qu'un vitrage (12), notamment un vitrage (12) en verre mince d'une épaisseur < 200 µm, au cours d'un processus de découpe dans lequel ledit vitrage (12) est sectionné le long d'une arête de coupe (34), comprenant
- un corps de base (14) pouvant être parcouru par du gaz,
- un système (18) de guidage de gaz, conçu pour l'amenée et la mise en circulation de gaz dans ledit corps de base (14), et à travers ce dernier, ledit vitrage (12) pouvant alors être placé sur le gaz sortant dudit corps de base (14),
**caractérisé par** une unité (20) de verrouillage à demeure qui est affectée à l'assujettissement du vitrage (12) par rapport au dispositif (10), et qui coopère avec ledit vitrage (12) de façon telle que, lors du processus de découpe, ledit vitrage (12) vienne au contact du corps de base (14) dans une zone de contact (24) et que les arêtes de coupe (34) soient soulevées à l'extérieur de ladite zone de contact (24), par le gaz sortant, et soient positionnées à distance dudit corps de base (14), ladite unité (20) de verrouillage à demeure comportant des moyens de dépression (22) destinés à créer une dépression ou un vide, en vue de l'assujettissement dudit vitrage (12) par rapport audit dispositif (10).

2. Dispositif selon la revendication 1,
**caractérisé par le fait que** le système (18) de guidage du gaz inclut un certain nombre de canaux (15) affectés à la mise en circulation dudit gaz à travers le corps de base (14).

3. Dispositif selon l'une des revendications 1 ou 2,
**caractérisé par** une couche, en particulier une couche frittée (16) déposée sur le corps de base (14), qui peut être parcourue par du gaz et qui est déposée, sur ledit corps de base, de telle sorte que ladite couche frittée (16) inclue la zone de contact (24).

4. Dispositif selon la revendication 1,
**caractérisé par le fait que** les moyens de dépression (22) présentent un ou plusieurs canal (canaux) d'évacuation (26) qui traverse(nt) le corps de base (14) et la couche frittée (16), et/ou une pompe à vide (28) coopérant avec lesdits canaux d'évacuation (26) afin d'évacuer une part du gaz sortant dudit corps de base (14) ou de ladite couche frittée (16).

5. Dispositif selon la revendication 4,
**caractérisé par le fait que** des systèmes de blocage (32), conçus pour bloquer ou libérer sélectivement le courant d'air circulant par les canaux d'évacuation (26), sont implantés dans lesdits canaux d'évacuation (26).

6. Dispositif selon l'une des revendications 1, 4 et 5,
**caractérisé par le fait que** les moyens de dépression (22) sont par ailleurs dotés d'un système de canalisation (30), en vue de canaliser le flux du gaz sortant du corps de base (14) ou de la couche frittée (16).

7. Dispositif selon l'une des revendications 1 à 3,
**caractérisé par le fait que** l'unité (20) de verrouillage à demeure inclut des moyens (36) magnétiques, magnétisables ou magnétisés.

8. Dispositif selon la revendication 7,
**caractérisé par le fait que** la couche frittée (16) renferme des particules (38) magnétiques, magnétisables ou magnétisées qui coopèrent avec des corps (40) magnétiques, magnétisables ou magnétisés, pouvant être déposés sur le vitrage (12), en vue du verrouillage à demeure dudit vitrage (12).

9. Procédé de présentation et de verrouillage à demeure, sur un dispositif (10), d'un vitrage (12) notamment constitué d'un vitrage (12) en verre mince d'une épaisseur < 200 µm, au cours d'un processus de découpe dans lequel ledit vitrage (12) est sectionné le long d'une arête de coupe (34), lequel dispositif (10) comprend un corps de base (14) pouvant être parcouru par du gaz, incluant les étapes suivantes :
- amenée et mise en circulation de gaz dans ledit corps de base (14), et à travers ce dernier, au moyen d'un système (18) de guidage de gaz,
- mise en place du vitrage (12) sur le gaz sortant dudit corps de base (14), et
- assujettissement dudit vitrage (12), par rapport audit dispositif, au moyen d'une unité (20) de verrouillage à demeure qui coopère avec ledit vitrage (12) de façon telle que, lors du processus de découpe, ledit vitrage (12) vienne au contact du corps de base (14) dans une zone de contact (24) et que les arêtes de coupe (34) soient soulevées à l'extérieur de ladite zone de contact (24), par le gaz sortant, et soient positionnées à distance dudit corps de base (14), ladite unité (20) de verrouillage à demeure comportant des moyens de dépression (22) destinés à créer une dépression ou un vide, en vue de l'assujettissement dudit vitrage (12) par rapport audit dispositif (10).

10. Procédé selon la revendication 9, **caractérisé par le fait que** l'étape d'assujettissement du vitrage (12), par rapport au dispositif (10), inclut la création d'une dépression ou d'un vide à l'aide de moyens de dépression (22).

11. Procédé selon la revendication 9, **caractérisé par le fait que** l'étape d'assujettissement du vitrage (12), par rapport au dispositif (10), inclut la coopération de particules (38) magnétiques, magnétisables ou magnétisées d'une couche frittée (16), déposée sur le corps de base (14), avec des corps (40) magnétiques, magnétisables ou magnétisés pouvant être déposés sur ledit vitrage (12).
